(19) Europäisches Patentamt
European Patent Office
Office européen des brevets

(11) Numéro de publication: **0 034 086**
**B1**

(12) # FASCICULE DE BREVET EUROPEEN

(45) Date de publication du fascicule du brevet: **20.07.83**

(51) Int. Cl.³: **C 08 F 18/24**, C 08 F 4/34

(21) Numéro de dépôt: **81400131.9**

(22) Date de dépôt: **29.01.81**

(54) **Procédé de synthèse de polymères et de copolymères à base de chloroformiate de vinyle.**

(30) Priorité: **07.02.80 FR 8002651**

(43) Date de publication de la demande:
**19.08.81 Bulletin 81/33**

(45) Mention de la délivrance du brevet:
**20.07.83 Bulletin 83/29**

(84) Etats contractants désignés:
**BE CH DE FR GB IT LI LU NL SE**

(56) Documents cités:
**FR-A-2 381 739**
**US-A-2 370 588**
**US-A-2 377 035**
**US-A-2 476 637**
**US-A-3 022 231**
**US-A-3 051 686**
**US-A-3 118 862**
**US-A-3 432 484**
**US-A-3 528 956**
**US-A-3 547 860**
**US-A-3 821 273**
**J. Polymer Science, Part C, no 24, pp. 75–88 (1968)**

(73) Titulaire: **SOCIETE NATIONALE DES POUDRES ET EXPLOSIFS, 12, quai Henri IV, F-75181 Paris Cedex 04 (FR)**

(72) Inventeur: **Boileau, Sylvie, 38-40, rue des Cordelières, F-75013 Paris (FR)**
Inventeur: **Meunier, Gilles, 24, rue Fernand Pelloutier, F-92100 Boulogne Billancourt (FR)**
Inventeur: **Journeau, Sabine, 6, boulevard Jean Jaurès, F-91290 Arpajon (FR)**

**EP 0 034 086 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# Procédé de synthèse de polymères et de copolymères à base de chloroformiate de vinyle

La présente invention concerne un procédé de synthèse de polymères et de copolymères à base de chloroformiate de vinyle.

L'homopolymère poly(chloroformiate de vinyle) et les copolymères à base de chloroformiate de vinyle n'ont pas été jusqu'à présent très étudiés. La cause en est double. D'une part, on ne connaissait pas, jusqu'au brevet français 2 381 739 de la Demanderesse, de procédés de fabrication industrielle du chloroformiate de vinyle autre que la pyrolyse du bischloroformiate de l'éthylène glycol qui a un faible rendement et qui donne beaucoup de sous-produits. D'autre part, on ne connaissait pas de conditions permettant d'accéder à un homopolymère ou à des copolymères de haute masse molaire et de bonne stabilité.

Ainsi SCHAEFGEN, dans le brevet américain 3 118 862 et dans Journal of Polymer Science, Part C, No 24, pages 75–88, (1968), a essayé de polymériser et de copolymériser le chloroformiate de vinyle par voie radicalaire en utilisant des amorceurs très variés.

Cet auteur rapporte les échecs que l'on subit en utilisant un dérivé azoïque tel que l'azobisisovaléronitrile, un peroxyde tel que le peroxyde de benzoyle ou un rayonnement ultraviolet associé au monométhyl éther de la benzoïne. Il préconise en revanche l'utilisation de trialkylboranes tels que le triéthylborane ou le tributylborane, en présence d'une petite quantité d'air. Il préconise encore le difluorure d'azote, $N_2F_2$. Toutefois ces amorceurs, s'ils permettent d'accéder effectivement à des masses molaires appréciables et à des polymères peu dégradés, ont deux inconvénients sérieux: leur marginalité et leurs conditions d'emploi. En effet, les trialkylboranes doivent être utilisés entre 0 et −80 °C alors que $N_2F_2$, s'il agit à température ambiante, est d'une manipulation délicate compte tenu de sa tendance à décomposition avec libération de fluor gazeux.

Il a maintenant été trouvé un procédé de polymérisation du chloroformiate de vinyle conduisant à des hautes masses molaires, utilisant des conditions douces et offrant de bonnes garanties de sécurité.

Le procédé de polymérisation du chloroformiate de vinyle selon l'invention est caractérisé en ce qu'on utilise comme amorceur un percarbonate aliphatique ou cycloaliphatique.

Selon un mode de réalisation préféré du procédé selon l'invention, on utilise un percarbonate de formule générale:

$$R_1-O-\underset{\overset{\|}{O}}{C}-O-O-\underset{\overset{\|}{O}}{C}-O-R_2$$

où $R_1$ et $R_2$ sont différents ou de préférence identiques, et sont un groupe alkyle linéaire ou ramifié comportant de 3 à 8 atomes de carbone ou bien un groupe cyclohexyle éventuellement substitué par un ou deux groupes alkyle linéaires ou ramifiés comportant de 1 à 4 atomes de carbone.

Selon un mode de réalisation particulièrement préféré, on utilise un percarbonate de dicyclohexyle éventuellement substitué par un ou deux groupes alkyle linéaires ou ramifiés comportant de 1 à 4 atomes de carbone. Deux percarbonates convenant particulièrement bien sont le percarbonate de dicyclohexyle et le percarbonate de bis (t-butyl-4 cyclohexyle).

Selon un autre mode de réalisation préféré, on effectue la polymérisation à une température comprise entre 0 et 50 °C, de préférence entre 15 et 40 °C.

Selon encore un autre mode de réalisation préféré, on utilise de 0,01 à 2%, de préférence de 0,04 à 1%, en mole d'amorceur par rapport au monomère.

La réaction s'effectue dans ces conditions en un temps généralement court de l'ordre de 10 minutes à 3 heures. La réaction peut s'effectuer aussi bien en masse qu'en solution. Dans ce dernier cas, on utilise un solvant inerte dissolvant du polymère et ne renfermant pas de peroxydes tel qu'un hydrocarbure aliphatique chloré, un éther dépéroxydé ou une cétone. Comme solvant on peut ainsi citer le dichlorométhane, le dioxanne, l'acétone. Quand on pratique en solution, il faut en général utiliser plus d'amorceur qu'en masse.

On ne connaissait pas, jusqu'à présent, de moyens pour polymériser le chloroformiate de vinyle en solution, opération beaucoup plus difficile qu'en masse. Dans le cadre du procédé selon l'invention, il est avantageux d'utiliser une atmosphère inerte: gaz inerte, tel que l'azote ou l'argon, ou vide, ce qui donne généralement de meilleurs résultats.

Comme percarbonates aliphatiques utilisables dans le cadre de l'invention, on peut citer les percarbonates de diisopropyle, de di-n-butyle, de di-sec-butyle, de di-t-butyle, de bis (éthyl-2 hexyle). Comme percarbonates cycloaliphatiques qui sont utilisés de préférence selon l'invention, on peut citer le percarbonate de dicyclohexyle et le percarbonate de bis (t-butyl-4 cyclohexyle). Les percarbonates cycloaliphatiques sont préférés aux percarbonates aliphatiques, car ces derniers ont, dans les conditions de réaction du chloroformiate de vinyle, une tendance à la décomposition prématurée pouvant s'avérer gênante à l'usage. En effet, avec les percarbonates aliphatiques on obtient généralement des polymères légèrement colorés.

Le procédé selon l'invention s'applique non seulement à l'homopolymérisation du chloroformiate de vinyle mais encore à sa copolymérisation avec des monomères vinyliques polymérisables radicalairement notamment ceux ayant une réactivité à 40 °C au moins égale à celle de l'acétate de vinyle. Comme tels monomères on peut citer l'acrylonitrile, le méthacrylate de méthyle, le styrène, le chlorure de vinyle et, bien sûr, l'acétate de vinyle.

C'est avec de tels monomères que l'invention est particulièrement intéressante étant donné que,

malgré les importants progrès récemment réalisés sur le prix du chloroformiate de vinyle, on cherche plutôt à synthétiser des copolymères à faible taux de chloroformiate. Il est bien connu de l'homme de métier en matière de copolymérisation radicalaire, qu'il est possible d'ajuster la composition finale d'un copolymère à l'aide essentiellement de trois paramètres: la réactivité relative des monomères, leur proportion initiale et la durée de réaction. Toutefois tout cela n'est possible que si l'on dispose d'un moyen pour catalyser suffisamment la réaction du monomère clef. Il faut noter que dans le cas présent, les amorceurs préconisés par SCHAEFGEN ne permettaient pas, d'après ses travaux, de bien contrôler la réaction puisqu'on obtenait, par exemple, des mélanges d'homopolymères d'acétate de vinyle et de copolymères acétate-chloroformiate de vinyle à taux mal contrôlé et très élevé de ce dernier monomère, lors des tentatives de copolymérisation d'acétate et de chloroformiate de vinyle. C'est donc un mérite important de l'invention d'avoir fourni un moyen permettant de traiter le chloroformiate de vinyle comme les monomères vinyliques plus répandus et plus connus que lui. Pour illustrer comment on peut contrôler la composition des copolymères à base de chloroformiate de vinyle, on doit distinguer les comonomères plus réactifs ou aussi réactifs que lui (vis à vis de la polymérisation) et les comonomères moins réactifs. Dans le cas de ces derniers, il y aura lieu d'en utiliser un fort excès par rapport au chloroformiate de vinyle (d'autant plus fort excès que la différence de réactivité est grande) et de prolonger relativement longtemps la réaction. Dans le cas d'un comonomère plus réactif, si l'on vise également un copolymère à taux de chloroformiate relativement peu élevé, il y a intérêt à employer une proportion dudit comonomère d'autant plus faible que la réactivité de ce dernier est plus forte que celle du chloroformiate de vinyle et il est préférable d'arrêter relativement tôt la réaction, à défaut de quoi, en dépit des réactions spontanées de terminaisons de chaines, on risque d'obtenir un copolymère ayant une masse très élevée et un taux trop faible de chloroformiate: autrement dit, il y a lieu d'achever la réaction de copolymérisation au moment où tout le chloroformiate de vinyle a réagi et d'éliminer le comonomère en excès qui peut subsister. La quantité de comonomère ainsi éliminée correspond approximativement à la quantité de comonomère à retirer du chargement initial d'une opération suivante, visant au même résultat. Quant aux rapports de réactivité de couples de monomères, ils peuvent être déterminés de manière très satisfaisante en appliquant la méthode d'évaluation graphique proposée par Kelen et Tüdos dans J. Macromol. Sci. Chem. A9, 1 (1975) et par Kelen et coll. op.cit. A 10, 1513 (1976).

Quoiqu'il ait été expliqué que la recherche du rendement ne soit pas forcément souhaitée notamment en copolymérisation, le rendement général de la réaction de polymérisation est généralement compris entre 60 et 100% après 3 heures.

Les masses molaires atteintes en homopolymérisation grâce au procédé selon l'invention sont généralement comprises entre 14 000 et 100 000.

L'invention concerne également à titre de produits nouveaux les polymères et copolymères ayant la structure de ceux obtenus par le procédé selon l'invention. Elle concerne en particulier les poly(chloroformiate de vinyle) de masse moléculaire en nombre comprise entre 60 000 et 100 000, les copolymères d'acétate de vinyle et de chloroformiate de vinyle de masse moléculaire en nombre comprise entre 8 000 et 50 000 et renfermant de 0,5 à 50% de groupes chloroformiate et 50 à 99,5% de groupes acétate, les copolymères de styrène et de chloroformiate de vinyle ayant une masse comprise entre 8000 et 50 000 comprenant de 1 à 10% de groupes chloroformiate, ainsi que les copolymères de chlorure de vinyle et de chloroformiate de vinyle ayant une masse comprise entre 8000 et 100 000 comprenant de 0,5 à 30% de groupes chloroformiate.

Ces masses peuvent être déterminées à partir de celles du polymère obtenu après neutralisation des fonctions chloroformiates, par exemple avec une amine.

Les homopolymères et copolymères obtenus par le procédé selon l'invention sont notamment utiles comme matériaux transparents ainsi que pour l'industrie pharmaceutique, photographique, alimentaire, ou des colorants comme polymères supports réactifs.

L'invention est illustrée par les exemples non limitatifs suivants:

Exemple 1

On a polymérisé 54 mM de chloroformiate de vinyle à l'aide de 0,027 mM de percarbonate de dicyclohexyle (PCDH), à 40 °C et en masse. Le rapport molaire amorceur/monomère était égal à 0,05%.

Au bout de 100 minutes, on a dissout le polymère obtenu dans le tétrahydrofuranne et on l'a reprécipité dans l'éther de pétrole, sous forme d'une poudre blanche.

On a obtenu un rendement de 55%. Le polymère a été identifié par son spectre Infra-Rouge et sa masse a été déterminée par déduction de celle, obtenue par osmométrie, du polymère modifié par la N-benzyl méthylamine en excès. La masse du poly(chloroformiate de vinyle) était de 14 500.

La polymérisation a été effectuée sous azote. L'amorceur avait été préalablement séché jusqu'à poids constant et le monomère avait été dégazé trois fois sous vide.

Exemple 2

On a repris le conditions de réaction et de séparation de l'exemple précédent sur 0,185 M de chloroformiate de vinyle et avec, cette fois-ci, 0,0185 mM de PCDH, soit un rapport amorceur/monomère de 0,1%, en mole.

La réaction était terminée au bout de 8 minutes seulement, le rendement étant supérieur à 90%.

La masse $\overline{M}n$ du poly(chloroformiate de vinyle) ainsi obtenu était de 47 500. Cette masse a été déterminée comme à l'exemple 1.

Exemples 3 à 5

On a comparé le pouvoir d'amorçage du percarbonate de dicyclohexyle (PCDH) selon l'invention par rapport à deux amorceurs industriels, le peroxyde de benzoyle (P.B.) et l'azobisisobutyronitrile (AIBN).

Toutes les réactions ont été effectuées sous azote, sur un même lot de monomère avec un même rapport amorceur/monomère de 0,5%.

| Ex. | Amorceur | VCF (a) en mM | Amorceur (en mM) | T (b) (°C) | t (en h) | $\overline{M}n$ | Rdt (en %) |
|---|---|---|---|---|---|---|---|
| 3 | PCDH | 58 | 0,28 | 35 | 1,5 | 60 000 | 83 |
| 4 | P.B. | 74 | 0,37 | 54 | 15 | 39 000 | 92 |
| 5 | AIBN | 81 | 0,4 | 56 | 17 | 58 500 | 98 |

(a) VCF: chloroformiate de vinyle

(b) Température de polymérisation.

Dans ces essais comparatifs on a obtenu un polymère incolore avec PCDH alors qu'il était coloré en brun avec P.B. et AIBN.

On notera bien que l'amorceur selon l'invention permet d'obtenir une masse plus élevée que les amorceurs antérieurement connus et ce, dans un temps dix fois plus court, à une température de 20 °C plus faible. Toutes les masses ont été déterminées à partir de celles du polymère modifié par la N-benzyl méthylamine.

Exemple 6

On a opéré la polymérisation de 219 mM de chloroformiate de vinyle à l'aide de 1,1 mM de PCDH à 35 °C. On a opéré cette fois-ci sous vide. Le rapport amorceur/monomère était de 0,5%.

On a obtenu avec un rendement supérieur à 90% et au bout de 47 minutes seulement, un poly(chloroformiate de vinyle) incolore de masse $\overline{M}n$ = 68 000.

Exemple 7

On a polymérisé 61 mM de chloroformiate de vinyle à l'aide de 0,3 mM de percarbonate de bis(t-butyl-4 cyclohexyle). Le rapport amorceur/monomère était égal à 0,5%. La polymérisation a été effectuée sous vide, à 35 °C.

Au bout de 40 minutes seulement on a obtenu du poly(chloroformiate de vinyle) parfaitement incolore, de masse $\overline{M}n$ = 72 000, avec un rendement de 98%.

Exemple 8

On a polymérisé du chloroformiate de vinyle en solution, ce qui n'avait jamais été fait auparavant, pour autant que l'on sache.

On a fait polymériser à cet effet 49 mM de chloroformiate de vinyle en solution dans 13,8 ml de dichlorméthane, en présence de 0,24 mM de PCDH.

La température de polymérisation était de 35 °C.

On a obtenu un rendement de 93% au bout de 20 heures, en un poly (chloroformiate de vinyle) incolore de masse $\overline{M}n$ = 22 000.

Exemple 9

Dans les mêmes conditions que précédemment avec 142 mM de monomère dans 40 ml de dichlorométhane et avec un rapport PCDH/monomère de 1,5% en moles, on a obtenu, toujours à 35 °C, un rendement de 100% en poly(chloroformiate de vinyle) incolore, au bout de 27 heures.

D'un point de vue industriel, il est extrêmement avantageux de pouvoir opérer en solution. La réaction est en effet mieux contrôlée et la masse moléculaire souhaitée peut être atteinte avec une grande précision. On notera de plus que le maintien d'une température de 35 °C est une opération très aisée et économe d'énergie.

Dans les exemples 8 et 9, les polymères ont été recueillis par précipitation du milieu réactionnel dans l'éther de pétrole. Les essais, dans ces exemples, ont été effectués sous vide.

Exemple 10

SCHAEFGEN (op. cit., page 84) a décrit un copolymère d'acétate de vinyle et de chloroformiate de vinyle renfermant plus de 70% de motifs chloroformiates.

Le rendement n'était que de 50% environ et la polymérisation nécessitait un refroidissement à 0 °C.

On a copolymérisé 80 mM de chloroformiate de vinyle et 80 mM d'acétate de vinyle en masse, à 35 °C, sous azote et en présence de 0,4 mM de PCDH. Au bout d'une heure et quart on a arrêté la réaction et recueilli un copolymère d'acétate de vinyle et de chloroformiate de vinyle, de masse $\overline{M}n$ = 39 800, avec un rendement de 92%.

Ce copolymère renfermait 46% de motifs chloroformiate et 54% de motifs acétate.

Dans les conditions du procédé selon l'invention, la réactivité du chloroformiate de vinyle et de l'acétate de vinyle sont sensiblement identiques de sorte qu'en partant d'une certaine proportion de chacun de ces monomères on peut obtenir facilement un copolymère présentant des motifs chloroformiate et acétate dans la même proportion. Des copolymères comprenant une fraction de 0,5% à 50% de motifs chloroformiate sont ainsi accessibles. Cette «dilution» des motifs actifs à l'aide d'un monomère peu onéreux rend ces copolymères très intéressants industriellement.

Exemples 11 à 15

On a copolymérisé de l'acétate de vinyle (AV) et du chloroformiate de vinyle (CFV) en solution dans le dichlorométhane à 35 °C, pour montrer avec quelle facilité l'invention permet de faire varier la composition d'un copolymère dérivant du chloroformiate de vinyle.

Les conditions observées et les résultats obtenus figurent dans le tableau suivant:

| Ex. | $\langle AV\rangle_0 + \langle CFV\rangle_0$ mole/1 (a) | Durée h | Rdt % | Fraction molaire initiale en AV (b) | Composition du copolymère (%) (c) AV | CFV |
|---|---|---|---|---|---|---|
| 11 | 2,40 | 1 | 43,3 | 0,83 | 81 | 19 |
| 12 | 2,32 | 1 | 17,4 | 0,585 | 57 | 43 |
| 13 | 2,43 | 0,75 | 20,6 | 0,495 | 50 | 50 |
| 14 | 2,40 | 0,5 | 12,1 | 0,39 | 44 | 56 |
| 15 | 2,31 | 0,55 | 11,8 | 0,20 | 25 | 75 |

(a) concentration initiale globale des monomères dans la solution

(b) fraction molaire initiale d'acétate de vinyle monomère

(c) valeur moyenne entre la valeur trouvée par RMN et par le taux de chlore.

Dans chacune des manipulations on a utilisé 50 ml de $CH_2Cl_2$ et 0,5% en mole d'amorceur du PCDH par rapport aux monomères.

Exemple 16

On a copolymérisé 55 mM de chloroformiate de vinyle et 57 mM de styrène, en masse, à 40 °C sous vide, et en présence de 0,165 mM de PCDH. On a obtenu un copolymère de styrène et de chloroformiate de vinyle de masse $\overline{M}n$= 14 000, avec un rendement de 25%.

Ce copolymère comprenait 3% de motifs chloroformiate et 97% de motifs styrène.

Un tel copolymère comporte un nombre de motifs réactifs très suffisant et, néanmoins, est d'un prix de revient bas compte tenu de la proportion et du prix modique du styrène.

Exemple 17

On a copolymérisé 118 mM de chlorure de vinyle et 112 mM de chloroformiate de vinyle dans 50 ml de dichlorométhane, à 35 °C, sous vide, et en présence de 2,3 mM de PCDH (soit 1% d'amorceur par rapport aux monomères).

Au bout d'une heure, la réaction a été arrêtée et on a obtenu avec un rendement de 6% un copolymère de chlorure de vinyle et de chloroformiate de vinyle dont la composition a été déterminée par RMN du proton du groupement $-\overset{|}{\underset{|}{C}}-H$.

Cette composition est de 75% de chlorure pour 25% de chloroformiate alors qu'initialement le mélange contenait 51,3% de chlorure de vinyle et 48,7% de chloroformiate de vinyle.

Exemple 18

On a polymérisé du chloroformiate de vinyle en masse en présence de 0,5% en mole de percarbonate de diisopropyle. La polymérisation a eu lieu à 40 °C, pendant 24 heures.

On a obtenu au terme des 24 heures un homopolychloroformiate de vinyle coloré, avec un rendement de 70%.

Ce polymère avait une densité de 1,40 et était soluble dans l'acétone, mais non dans le chloroforme.

Si l'on compare cette manipulation avec les exemples 1, 2, 6 et 7, on voit qu'avec les percarbonates cycloaliphatiques, la réaction est beaucoup plus rapide, le rendement rapporté au temps nettement meilleur et la qualité du polymère également meilleure qu'avec les percarbonates aliphatiques dont on a ici utilisé un représentant typique.

**Revendications.**

1. Procédé de synthèse de polymères et de copolymères du chloroformiate de vinyle, caractérisé en ce qu'on utilise comme amorceur un percarbonate aliphatique ou cycloaliphatique.

2. Procédé de synthèse de polymères et de copolymères du chloroformiate de vinyle selon la revendication 1, caractérisé en ce qu'on utilise un percarbonate de formule générale:

$$R_1 - O - \underset{\underset{O}{\|}}{C} - O - O - \underset{\underset{O}{\|}}{C} - O - R_2$$

où $R_1$ et $R_2$ sont différents ou, de préférence, identiques et sont un groupe alkyle linéaire ou ramifié comportant de 3 à 8 atomes de carbone ou bien un groupe cyclohexyle éventuellement substitué par un ou deux groupes alkyle linéaires ou ramifiés comportant de 1 à 4 atomes de carbone.

3. Procédé de synthèse de polymères et de copolymères du chloroformiate de vinyle, selon l'une quelconque des revendications 1 ou 2, caractérisé en ce qu'on utilise un percarbonate de dicyclohexyle éventuellement substitué per un ou deux groupes alkyle linéaires ou ramifiés comportant de 1 à 4 atomes de carbone.

4. Procédé de synthèse de polymères et de copolymères du chloroformiate de vinyle selon la revendication 3, caractérisé en ce qu'on utilise le percarbonate de dicyclohexyle.

5. Procédé de synthése de polyméres et de copolyméres du chloroformiate de vinyle selon la revendication 3, caractérisé en ce qu'on utilise le percarbonate de bis (t-butyl-4 cyclohexyle).

6. Procédé de synthèse de polymères et de copolymères du chloroformiate de vinyle selon l'une quelconque des revendications précédentes, caractérisé en ce qu'on effectue la polymérisation à une température comprise entre 0 et 50 °C, de préférence entre 15 et 40 °C.

7. Procédé de synthése de polymères ou de copolymères du chloroformiate de vinyle selon l'une des revendications précédentes, caractérisé en ce qu'on utilise de 0,01 à 2% de préférence de 0.04, à 1% en mole d'amorceur par rapport au monomère.

8. Procédé selon l'une quelconque des revendications précédentes, caractérisé en ce qu'on effectue la réaction sous atmosphère inerte.

9. Procédé selon l'une quelconque des revendications précédentes, caractérisé en ce qu'on effectue la réaction de polymérisation dans un solvant inerte dissolvant du polymère et ne renfermant pas de peroxydes.

10. Procédé selon la revendication 9, caractérisé en ce que le solvant est choisi dans le groupe constitué par les hydrocarbures aliphatiques chlorés, les éthers dépéroxydés et les cétones.

11. Poly(chloroformiate de vinyle) tel que celui obtenu par le procédé selon l'une quelconque des revendications précédentes, ayant une masse moléculaire en nombre comprise entre 60 000 et 100 000.

12. Copolymères de chloroformiate de vinyle et d'acétate de vinyle tels que ceux obtenus par le procédé selon l'une quelconque des revendications précédentes, ayant une masse moléculaire en nombre comprise entre 8 000 et 50 000 et renfermant de 0,5 à 50% de groupes chloroformiate et 50 à 99,5% de groupes acétate.

13. Copolymères de chloroformiate de vinyle et de styrène tels que ceux obtenus par le procédé selon l'une quelconque des revendications précédentes, ayant une masse moléculaire en nombre comprise entre 8 000 et 50 000 comprenant de 1 à 10% de groupes chloroformiate.

14. Copolymères de chloroformiate de vinyle et de chlorure de vinyle tels que ceux obtenus par le procédé selon l'une quelconque des revendications précédentes, ayant une masse moléculaire en nombre comprise entre 8 000 et 100 000 comprenant de 0,5 à 30% de groupes chloroformiate.

**Patentansprüche**

1. Verfahren zur Synthese von Polymeren und Copolymeren von Vinylchlorformiat,
dadurch gekennzeichnet, dass als Initiator ein aliphatisches oder cycloaliphatisches Percarbonat verwendet wird.

2. Verfahren nach Anspruch 1, dadurch gekennzeichnet, dass ein Percarbonat der allgemeinen Formel

$$R_1-O-\underset{\underset{O}{\|}}{C}-O-O-\underset{\underset{O}{\|}}{C}-O-R_2$$

verwendet wird, in der bedeuten:

$R_1$ und $R_2$ unabhängig oder vorzugsweise identisch geradkettiges oder verzweigtes $C_3$- bis $C_8$-Alkyl oder Cyclohexyl, das ggf mit einer oder zwei geradkettigen oder verzweigten $C_1$- bis $C_4$-Alkylgruppen substituiert ist.

3. Verfahren nach Anspruch 1 oder 2, dadurch gekennzeichnet, dass ein ggf mit einer oder zwei geradkettigen oder verzweigten $C_1$- bis $C_4$-Alkylgruppen substituiertes Dicyclohexylpercarbonat verwendet wird.

4. Verfahren nach Anspruch 3, dadurch gekennzeichnet, dass Dicyclohexylpercarbonat verwendet wird.

5. Verfahren nach Anspruch 3, dadurch gekennzeichnet, dass Bis(t-butyl-4-cyclohexyl)-percarbonat verwendet wird.

6. Verfahren nach einem der vorhergehenden Ansprüche, dadurch gekennzeichnet, dass die Polymerisation bei einer Temperatur von 0 bis 50 °C und vorzugsweise 15 bis 40 °C vorgenommen wird.

7. Verfahren nach einem der vorhergehenden Ansprüche, dadurch gekennzeichnet, dass 0,01 bis 2 mol-% und vorzugsweise 0,04 bis 1 mol-% Initiator, bezogen auf das Monomer, eingesetzt werden.

8. Verfahren nach einem der vorhergehenden Ansprüche, dadurch gekennzeichnet, dass die Reaktion in einer Inertatmosphäre durchgeführt wird.

9. Verfahren nach einem der vorhergehenden Ansprüche, dadurch gekennzeichnet, dass die Polymerisationsreaktion in einem inerten Lösungsmittel durchgeführt wird, das das Polymer löst und keine Peroxide enthält.

10. Verfahren nach Anspruch 9, dadurch gekennzeichnet, dass das Lösungsmittel unter den chlorierten aliphatischen Kohlenwasserstoffen von Peroxiden befreiten Ethern und Ketonen ausgewählt wird.

11. Polyvinylchlorformiat, erhältlich nach dem Verfahren nach einem der vorhergehenden Ansprüche mit einem Zahlenmittel des Molekulargewichts von 60.000 bis 100.000.

12. Vinylchlorformiat-Vinylacetat-Copolymere, erhältlich nach dem Verfahren nach einem der vorhergehenden Ansprüche mit einem Zahlenmittel des Molekulargewichts von 8.000 bis 50.000 und einem Gehalt von 0,5 bis 50% Chlorformiatgruppen und 50 bis 99,5% Acetatgruppen.

13. Vinylchlorformiat-Styrol-Copolymere, erhältlich nach dem Verfahren nach einem der vorhergehenden Ansprüche mit einem Zahlenmittel des Molekulargewichts von 8.000 bis 50.000 und einem Gehalt von 1 bis 10% Chlorformiatgruppen.

14. Vinylchlorformiat-Vinylchlorid-Copolymere, erhältlich nach dem Verfahren nach einem der vorhergehenden Ansprüche mit einem Zahlenmittel des Molekulargewichts von 8.000 bis 100.000 und einem Gehalt von 0,5 bis 30% Chlorformiatgruppen.

**Claims**

1. Process for the synthesis of vinyl chloroformate polymers and copolymers, characterised in that an aliphatic or cycloaliphatic percarbonate is used as the initiator.

2. Process for the synthesis of vinyl chloroformate polymers and copolymers according to claim 1, characterised in that a percarbonate of the general formula:

$$R_1-O-\underset{\underset{O}{\|}}{C}-O-O-\underset{\underset{O}{\|}}{C}-O-R_2$$

is used, in which $R_1$ and $R_2$ are different or, preferably, identical and are a linear or branched alkyl group containing from 3 to 8 carbon atoms or alternatively a cyclohexyl group optionally substituted by one or two linear or branched alkyl groups containing from 1 to 4 carbon atoms.

3. Process for the synthesis of vinyl chloroformate polymers and copolymers according to either one of claims 1 or 2, characterised in that a dicyclohexyl percarbonate optionally substituted by one or two linear or branched alkyl groups containing from 1 to 4 carbon atoms is used.

4. Process for the synthesis of vinyl chloroformate polymers and copolymers according to claim 3, characterised in that dicyclohexyl percarbonate is used.

5. Process for the synthesis of vinyl chloroformate polymers and copolymers according to claim 3, characterised in that bis-(4-t-butylcyclohexyl) percarbonate is used.

6. Process for the synthesis of vinyl chloroformate polymers and copolymers according to any one of the preceding claims, characterised in that the polymerisation is carried out at a temperature between 0 and 50 °C, and preferably between 15 and 40 °C.

7. Process for the synthesis of vinyl chloroformate polymers or copolymers according to one of the preceding claims, characterised in that from 0.01 to 2 mol%, preferably from 0.04 to 1 mol%, of initiator is used relative to the monomer.

8. Process according to any one of the preceding claims, characterised in that the reaction is carried out under an inert atmosphere.

9. Process according to any one of the preceding claims, characterised in that the polymerisation reaction is carried out in an inert solvent which dissolves the polymer and does not contain peroxides.

10. Process according to claim 9, characterised in that the solvent is chosen from the group comprising chlorinated aliphatic hydrocarbons, ethers from which peroxide has been removed, and ketones.

11. Poly-(vinyl chloroformate) such as that obtained by the process according to any one of the preceding claims, having a number-average molecular weight of between 60,000 and 100,000.

12. Vinyl chloroformate/vinyl acetate copolymers such as those obtained by the process according to any one of the preceding claims, having a number-average molecular weight of between 8,000 and 50,000 and containing from 0.5 to 50% of chloroformate groups and 50 to 99.5% of acetate groups.

13. Vinyl chloroformate/styrene copolymers such as those obtained by the process according to any one of the preceding claims, having a number-average molecular weight of between 8,000 and 50,000 and containing from 1 to 10% of chloroformate groups.

14. Vinyl chloroformate/vinyl chloride copolymers such as those obtained by the process according to any one of the preceding claims, having a number-average molecular weight of between 8,000 and 100,000 and containing from 0.5 to 30% of chloroformate groups.